(19) Europäisches Patentamt
European Patent Office
Office européen des brevets

(11) **EP 3 286 793 B1**

(12) **EUROPÄISCHE PATENTSCHRIFT**

(45) Veröffentlichungstag und Bekanntmachung des Hinweises auf die Patenterteilung:
**15.01.2020  Patentblatt 2020/03**

(21) Anmeldenummer: **16708926.7**

(22) Anmeldetag: **18.02.2016**

(51) Int Cl.:
*H01M 8/1018* (2016.01)   *H01M 8/1006* (2016.01)
*C25B 11/00* (2006.01)   *H01M 8/04* (2016.01)
*C25B 1/02* (2006.01)   *H01M 8/12* (2016.01)

(86) Internationale Anmeldenummer:
**PCT/DE2016/000062**

(87) Internationale Veröffentlichungsnummer:
**WO 2016/169539 (27.10.2016 Gazette 2016/43)**

(54) **VERFAHREN ZUR ERMITTLUNG VON ÜBERSPANNUNGEN IN BRENNSTOFFZELLEN**

METHOD FOR ASCERTAINING OVERVOLTAGES IN FUEL CELLS

PROCÉDÉ DE DÉTERMINATION DE SURTENSIONS DANS DES PILES À COMBUSTIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2015  DE 102015005220**

(43) Veröffentlichungstag der Anmeldung:
**28.02.2018  Patentblatt 2018/09**

(73) Patentinhaber: **Forschungszentrum Jülich GmbH 52425 Jülich (DE)**

(72) Erfinder: **KULIKOVSKY, Andrei 52385 Nideggen (DE)**

(56) Entgegenhaltungen:
• OFFER G J ET AL: "Using electrochemical impedance spectroscopy to compensate for errors when measuring polarisation curves during threeelectrode measurements of solid oxide fuel cell electrodes", ELECTROCHIMICA ACTA, ELSEVIER SCIENCE PUBLISHERS, BARKING, GB, Bd. 53, Nr. 26, 8. April 2008 (2008-04-08) , Seiten 7614-7621, XP023907519, ISSN: 0013-4686, DOI: 10.1016/J.ELECTACTA.2008.04.001 [gefunden am 2008-04-08]
• MASAHIRO WATANABE ET AL: "MANAGEMENT OF THE WATER CONTENT IN POLYMER ELECTROLYTE MEMBRANES WITH POROUS FIBER WICKS", JOURNAL OF THE ELECTROCHEMICAL SOCIETY, ELECTROCHEMICAL SOCIETY, Bd. 140, Nr. 11, 1. November 1993 (1993-11-01), Seiten 3190-3193, XP000424491, ISSN: 0013-4651
• JAN HENDRIK OHS ET AL: "The Effect of the Reference Electrode Position on the Measurement of Half Cell Polarization in Proton-Exchange Membrane Fuel Cells", JOURNAL OF THE ELECTROCHEMICAL SOCIETY, Bd. 159, Nr. 7, 17. Juli 2012 (2012-07-17) , Seiten 181-186, XP055273111, DOI: 10.1149/2.006207jes]
• DIETMAR GERTEISEN: "Realising a reference electrode in a polymer electrolyte fuel cell by laser ablation", JOURNAL OF APPLIED ELECTROCHEMISTRY, KLUWER ACADEMIC PUBLISHERS, DO, Bd. 37, Nr. 12, 3. Juli 2007 (2007-07-03), Seiten 1447-1454, XP019552392, ISSN: 1572-8838, DOI: 10.1007/S10800-007-9352-Y
• LIU Z ET AL: "Positioning the reference electrode in proton exchange membrane fuel cells: calculations of primary and secondary current distribution", ELECTROCHIMICA ACTA, ELSEVIER SCIENCE PUBLISHERS, BARKING, GB, Bd. 49, Nr. 6, 1. März 2004 (2004-03-01), Seiten 923-935, XP004485848, ISSN: 0013-4686, DOI: 10.1016/J.ELECTACTA.2003.10.004

EP 3 286 793 B1

- YUAN ET AL: "AC impedance technique in PEM fuel cell diagnosis-A review", INTERNATIONAL JOURNAL OF HYDROGEN ENERGY, ELSEVIER SCIENCE PUBLISHERS B.V., BARKING, GB, Bd. 32, Nr. 17, 29. November 2007 (2007-11-29), Seiten 4365-4380, XP022369437, ISSN: 0360-3199, DOI: 10.1016/J.IJHYDENE.2007.05.036

- A. A KULIKOVSKY: "Potentials Near a Curved Anode Edge in a PEM Fuel Cell: Analytical Solution for Placing a Reference Electrode", JOURNAL OF THE ELECTROCHEMICAL SOCIETY, Bd. 162, Nr. 10, 29. Juli 2015 (2015-07-29), Seiten F1191-F1198, XP055273163, ISSN: 0013-4651, DOI: 10.1149/2.0331510jes

EP 3 286 793 B1

**Beschreibung**

Die Erfindung betrifft ein neues Brennstoffzellendesign, insbesondere für eine Polymer-Elektrolytmembran-Brennstoffzelle (PEM-FC = polymer electrolyte membrane fuel cell), zur Ermittlung von Überspannungen.

Stand der Technik

In einer elektrochemischen Zelle werden die elektrochemischen Reaktionen an den beteiligten Elektroden maßgeblich von den Halbzellen-Überspannungen beeinflusst. Diese Überspannungen umfassen dabei sowohl Beiträge durch die Aktivierung als auch durch Transportverluste der entsprechenden Halbzellen. Daher wird es als vorrangiges Ziel angesehen, diese Beiträge im Rahmen eines neuen Zellkonzeptes zu minimieren. Eine der bislang gängigsten Verfahren zur Messung von Halbzellen-Überspannungen ist das Verfahren mit einer Referenzelektrode (RE).

Eine Referenzelektrode zielt immer darauf ab, das Potential $\Phi$ der Elektrolytmembran an einem beliebigen Punkt zwischen zwei Elektroden zu messen. Die Kenntnis dieses Potentials ermöglicht es im Prinzip, die Kathoden- und die Anoden-Überspannung zu separieren. Es hat sich jedoch herausgestellt, dass die geeignete Positionierung der Referenzelektrode nicht ganz einfach ist.

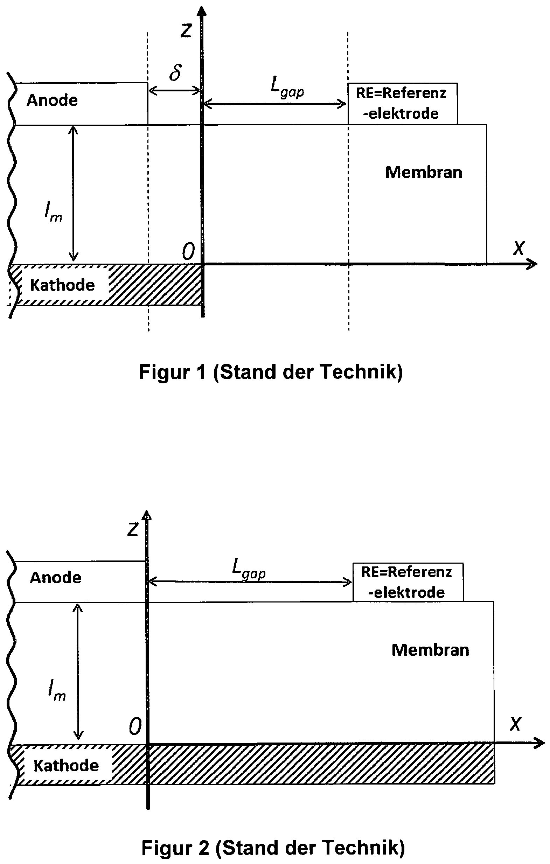

Eine typische Möglichkeit, eine Referenzelektrode innerhalb einer elektrochemischen Zelle zu positionieren, ist die, die Referenzelektrode an einer Zellseite in einem bestimmten Abstand $L_{gap}$ zu den aneinander ausgerichteten Kanten der Arbeitselektroden anzuordnen. Dazu wird eine Konstruktion gemäß Figur 1 vorgeschlagen, bei der die beiden Elektroden, bzw. deren seitlichen Kanten aneinander ausgerichtet sind.

B. Adler et al., J. Electrochem. Soc. 149, E166 (2002) haben im Rahmen von Simulationen gezeigt, dass dabei der Abstand $L_{gap}$ größer sein muss, als die dreifache Membranschichtdicke $l_m$. Bei diesem Abstand sind die Inhomogenitäten, die regelmäßig durch die Kante einer Arbeitselektrode bewirkt werden, und die Potentialverluste durch die Wasserstoff-Oxidationsreaktion (OOR) zu vernachlässigen und das an der Referenzelektrode gemessene Potential entspricht regelmäßig dem Membranpotential an einem beliebigen Punkt entlang der z-Achse zwischen der Anode und der Kathode im Arbeitsbereich.

Die Messungen des Membranpotentials $\Phi$ und der Elektrodenpotentiale erlauben es dann, die Überspannungen an der Anode und der Kathode zu separieren.

Weiterhin ist es mit Hilfe von Referenzelektroden möglich, eine elektrochemische Impedanzspektroskopie zwischen der Referenzelektrode und jeder anderen Zellelektrode durchzuführen. Diese Technik wurde im Bereich der Festoxid-Brennstoffzellen (SOFC) bereits angewendet.

In elektrochemischen Zellen, in denen Protonen als Ladungsträger fungieren, entspricht das Potential einer mit Wasserstoff gespeisten Referenzelektrode - unter Vernachlässigung der Spannungsverluste auf Grund der Wasserstoff-Oxidations/Generierungsreaktion - in der Regel dem Membranpotential $\Phi$ an der Stelle der Referenzelektrode.

In der Ausgestaltung zur Positionierung einer Referenzelektrode in einer Brennstoffzelle gemäß der Figur 1 treten allerdings zwei wesentliche Probleme auf. Soweit nichts anderes angegeben wird, wird im Folgenden davon ausgegangen, dass die Anode geerdet ist und alle Potentiale in Bezug auf die Anode gemessen werden.

Zunächst ist festzuhalten, dass selbst eine sehr kleine Verschiebung ($\delta$) in der Ausrichtung der Kanten der Arbeitselektroden in Bezug auf die Gegenelektrode bereits eine große Veränderung des Potentials an der Referenzelektrode bewirkt. Dieser Effekt wurde in der Literatur zu Festoxidbrennstoffzellen (SOFCs) schon ausreichend diskutiert. Dort wurden auch bereits einige Vorschläge zur Minimierung dieses Effektes beschrieben. Eine analoge Übertragung dieser Lösung auf PEMFCs wurde ebenfalls bereits in der Literatur vorgeschlagen, bei der über ein mit Hilfe der Laserablation exakt ausgerichtetes System von Arbeitselektroden berichtet wird.

Ein weiteres Problem, welches selbst in elektrochemischen Zellen auftritt, bei denen die Kanten der Arbeitselektroden exakt ausgerichtet sind ($\delta$ = 0), ist, dass der Wert des Potentials $\Phi$, welches durch die Referenzelektrode gemessen wird, zwar einem Punkt auf der z-Achse zwischen den Arbeitselektroden entspricht, die genaue Position dieses Punktes auf der z-Achse aber nicht bekannt ist. Daher kann auch in einem solchen Fall das gemessene Gleichspannungssignal der Referenzelektrode nicht eindeutig ausgewertet und interpretiert werden. Die Auftrennung der Halbzellen-Überspannungen kann auch in diesem Fall nur durch eine Impedanzspektroskopie erfolgen.

Neueste Entwicklungen von A. A. Kulikovsky und P. Berg (DE 102015001572.9) zeigen jedoch, dass es möglich ist, die Überspannung einer Arbeitselektrode in einer Brennstoffzelle zu bestimmen, indem das Potential einer Referenzelektrode gegenüber der geerdeten Gegenelektrode gemessen wird. Dazu wird eine Brennstoffzelle gemäß der Figur 2 eingesetzt. Diese umfasst eine großflächige (endlose) Arbeitselektrode, in diesem Fall eine Kathode, und eine Gegenelektrode, die wenigstens eine seitliche Kante aufweist. Als großflächig (endlos) wird eine Elektrode im Rahmen der Erfindung dann bezeichnet, wenn Ihre Ausdehnung wenigstens dem 10-fachen des Parameters $l_*$ entspricht, insbesondere wenn die Ausdehnung der Elektrode um mehrere Größenordnungen größer als die Membranschichtdicke ist. Durch die Kante der Gegenelektrode ergibt sich gegenüber der Arbeitselektrode ein Elektroden-freier Bereich auf der Elektrolytmembranoberfläche benachbart zur Gegenelektrode, in dem die Referenzelektrode auf der Elektrolytmembranoberfläche angeordnet ist. Dadurch dass die Arbeitselektrode in der Nähe des Arbeitsbereiches nunmehr keine Kante aufweist, stellt sich auch das Problem der Ausrichtung der Elektrodenkanten nicht mehr.

Es konnte gezeigt werden, dass der minimale Abstand $L_{gap}$ zwischen der Referenzelektrode und der Kante der Gegenelektrode dabei folgende Bedingung erfüllen muss:

$$L_{gap} \geq 3 \cdot l_* = 3 \cdot \sqrt{\frac{\sigma_m b_{ox} l_m}{2 j_{ox}^0}} \, ,$$

mit $\sigma_m$ = ionische Leitfähigkeit der Elektrolytmembran ($\Omega^{-1}$ cm$^{-1}$), $b_{ox}$ = Tafel-Steigung der Halb-Zelle für die elektrochemische Reaktion der Kathode, $l_m$ = Membranschichtdicke (cm)

und $j_{ox}^0$ = Austauschstromdichte des Katalysators der Kathode pro Einheit Elektrodenoberfläche in (A cm$^{-2}$). Bei Abständen zwischen Referenzelektrode und Gegenelektrode, die mindestens diesem Mindestabstand entsprechen, kann sichergestellt werden, dass die Messung des Potentials der Referenzelektrode nahezu der Überspannung der Arbeitselektrode, d. h. der Kathode entspricht.

Mit typischen Zellparametern (siehe Tabelle 1) ergibt sich hieraus für den Fall der Referenzelektrode auf der Anodenseite zur Ermittlung der Überspannung auf der Kathodenseite ein Mindestabstand $L_{gap}$ in der Größenordnung von einigen Zentimetern. Dieser Abstand ist aber für eine Versuchsbrennstoffzelle von üblicherweise 10 cm * 10 cm oder kleiner ein sehr großer Wert.

Aus G. J. Offer et al., "Using electrochemical impedance spectroscopy to compensate for errors when measuring polarisation curves during threeelectrode measurements of solid oxide fuel cell electrodes", Electrochimica Acta 53 (2008) 7614-7621 werden verschiedene Zellgeometrien vorgestellt, mit denen bei der Messung von Polarisationskurven bei Dreielektrodenmessungen an Festoxid-Brennstoffzellenelektroden Fehler kompensiert werden können. Unter anderem wird eine SOFC-Brennstoffzelle mit einer kreisförmigen Geometrie einer Arbeitselektrode und einer ebenfalls kreisförmigen Gegenelektrode aufgezeigt, die identische Ausmaße aufweisen, sowie eine ringförmige Referenzelektrode, die außerhalb und benachbart zur Arbeitselektrode angeordnet ist.

Ferner ist aus Masahiro Watanabe et al., "Management of the Water content in Polymer electrolyte membranes with porous fiber wicks", Journal of the Electrochemical Society 140(1993) November, No. 11, Hooksett, NH, US, eine Brennstoffzellenanordnung bekannt, die eine Polymer-Elektrolytmembran mit einer Schichtdicke von 220 µm aufweist, bei der auf einer Seite eine kreisförmige Anode und auf der anderen Seite eine kreisförmige Kathode mit einem Durchmesser von jeweils 40 mm angeordnet sind. Stetige Polarisationskurven wurden sowohl an der Anode als auch an der Kathode gegen eine an der kathodenseitigen Membranoberfläche angebrachte dynamische Wasserstoffelektrode (DHE) durchgeführt, wobei die dynamische Wasserstoffelektrode aus einer Palladiumfolie (0,05 mm Dicke, 1 mm Breite) mit galvanisch abgeschiedenem Platinschwarz bestand.

Gegenüber den symmetrisch aufgebauten Membran-Elektroden-Einheiten werden in Jan Hendrik Ohs et al., "The effect of the reference electrode position on the measurement of half cell polarization in proton-exchange membrane fuel cells", Journal of the Electrochemical Society, 159 (7) F181 - 186 (2012) zwei andere grundlegende Konfigurationen für die Integration einer dynamischen Wasserstoffelektrode (DHE) in die Membran-Elektroden-Einheit (MEA) untersucht. In einer ersten Ausführung wird die DHE in einem kreisförmigen Spalt in der Kathoden-Katalysatorschicht mit der Membran in Kontakt gebracht. In der zweiten Konfiguration wird die DHE zwischen zwei Membranschichten platziert, die als Sandwich-Konfiguration bezeichnet wird. Unterschiede zwischen den Bezugselektrodenaufbauten sind dabei auf eine inhomogene Elektrolytpotentialverteilung in der Nähe von den Rändern der Elektroden wie in der Literatur beschrieben zurückzuführen.

Aufgabe und Lösung

Die Aufgabe der Erfindung ist es, ein Verfahren für die Ermittlung der Überspannung einer Arbeitselektrode einer Brennstoffzelle bereit zu stellen, welches die bisherigen Nachteile aus dem Stand der Technik, insbesondere den vorgenannten Mindestabstand zur Referenzelektrode bei einer Brennstoffzellenanordnung, überwindet. Das Verfahren soll insbesondere bei Polymer-Elektrolytmembran-Brennstoffzellen (PEM-FC), Direktmethanol-Brennstoffzellen (DMFC) sowie bei Hochtemperatur Festoxid-Brennstoffzellen (SOFC) anwendbar sein. Ferner ist es die Aufgabe der Erfindung, eine verbesserte Brennstoffzellenanordnung bereit zu stellen, mit dessen Hilfe das vorgenannte erfindungsgemäße Verfahren durchgeführt werden kann.

Die Aufgaben der Erfindung werden gelöst durch eine neue Brennstoffzellenanordnung gemäß Anspruch 1, sowie durch ein Verfahren gemäß Anspruch 6. Vorteilhafte Ausgestaltungen der Vorrichtung und des Verfahrens finden sich in den jeweils darauf rückbezogenen Ansprüchen.

Gegenstand der Erfindung

Im Rahmen dieser Erfindung wurde - unterstützt durch numerische Simulationen für eine Polymer-Elektrolyt-membran-Brennstoffzellen (PEM-FC) mit einer konzentrischen kleinen Anode sowie einer konzentrischen großflächigen (endlosen) Kathode - herausgefunden, dass in Anlehnung und Fortführung an die in A. A. Kulikovsky und P. Berg DE 102015001572.9) vorgeschlagene Anordnung einer Referenzelektrode in einer Brennstoffzelle eine neue Anordnung die bisherigen Nachteile aus dem Stand der Technik überwindet. Dazu wird eine Brennstoffzellenanordnung vorgeschlagen, bei der es möglich ist, eine Referenzelektrode in deutlich kleinerem Abstand als bislang von einer Gegenelektrode, insbesondere einer Anode, zu plazieren, und dennoch die Überspannung der Gegenelektrode, insbesondere einer Kathode mit ausreichender Genauigkeit ermitteln zu können. Zudem verfügt diese neue Anordnung der Brennstoffzelle regelmäßig über Elektrodenflächen, die eine ausreichende elektrochemische Umsetzung sicherstellen können.

Es wurde ein Modell für eine radiale Verteilung der Kathodenüberspannung $\eta_c$ und des Membranpotentials $\Phi$ in dem Anoden-freien Bereich der Brennstoffzelle entwickelt. Mathematisch führt das Problem zu der axial-symmetrischen Poisson-Boltzmann Gleichung für die Kathodenüberspannung $\eta_c$. Die Lösung dieses Problems zeigt, dass $|\eta_c|$ einen rapiden Abfall auf Null in Abhängigkeit vom Radius zeigt, während $|\Phi|$ schnell auf den Wert von $\left|\eta_c^0\right|$ der Kathodenüberspannung im Arbeitsbereich der Zelle ansteigt. Je kleiner der Radius der konzentrischen Anode $R_a$ ist, desto schneller erreicht das Membranpotential $\Phi$ den Wert der Kathodenüberspannung im Arbeitsbereich $\eta_c^0$.

Daraus folgt, dass die Referenzzelle (RE) zur Messung der kathodischen Überspannung zwischen den (Arbeits-)Elektroden umso näher an den konvex gekrümmten Kantenbereich der gekrümmten Anode positioniert werden kann, je kleiner der lokale Radius $R_a$ dieses Bereichs ist.

Nachfolgend wird diejenige Elektrode der Brennstoffzelle, an der die Überspannung ermittelt werden soll, als Arbeitselektrode bezeichnet. Demgegenüber wird unter einer Gegenelektrode eine weitere Elektrode dieser Brennstoffzelle verstanden, die für die notwendige Stromleitung benötigt wird. Sowohl die Arbeits- als auch die Gegenelektrode sind dabei Elektroden, an denen elektrochemische Vorgänge in kontrollierter Weise ablaufen.

Die Literatur-Modelvorstellungen der Brennstoffzellen mit einer Referenzelektrode basieren auf den 2D Simulationen, bei denen das Membranpotential $\Phi$ in der Ebene senkrecht zu den Arbeitselektroden und der Referenzelektrode vorliegt (x-z Ebene in Figur 1). Die numerischen Berechnungen zeigen jedoch weder eine Abhängigkeit noch eine charakteristische Größenangabe bei einer Variation für das Membranpotential $\Phi$ in solchen Systemen.

Die Erfindung löst nun das Problem, eine aussagekräftige Überspannung in einer Brennstoffzelle mit Hilfe einer Referenzelektrode messen zu können, indem eine Brennstoffzellenanordnung mit einer Elektrolytmembran vorgeschlagen wird, welche eine durch wenigstens eine einzige Kante begrenzte Gegenelektrode mit wenigstens einem konvex gekrümmten Kantenbereich mit einem lokalen kleinen Krümmungsradius $R_a$ sowie eine durchgehende (endlose) Arbeitselektrode aufweist.

Im Rahmen der Erfindung wird unter einer durchgehenden Arbeitselektrode eine solche verstanden, dessen Kanten weit weg vom Arbeitsbereich, d. h. von den Kanten der Gegenelektrode angeordnet sind, so dass eine Beeinflussung des Arbeitsbereiches durch die Gegenelektrodenkanten regelmäßig ausgeschlossen werden kann. Auch hier bedeutet der Begriff durchgehende Arbeitselektrode, dass deren Ausdehnung um Größenordnungen größer ist, als der Parameter $l_*$

Benachbart zur Gegenelektrode weist die erfindungsgemäße Brennstoffzelle auf der Elektrolytmembranoberfläche einen Elektroden-freien Bereich auf. Innerhalb dieses Bereichs ist die Referenzelektrode in einem Abstand $L_{gap}$ von der Kante der Gegenelektrode angeordnet. Dieser Abstand beträgt in der Regel ein Vielfaches der Membrandicke. Auf der gegenüberliegenden Seite der Elektrolytmembran erstreckt sich die Arbeitselektrode. Sie liegt sowohl der Gegenelektrode als auch der Referenzelektrode gegenüber, und ist insofern als durchgehend zu betrachten. Als Referenzelektroden kommen dabei alle gängigen Standard-Referenzelektroden in Betracht, beispielsweise eine umgekehrte Wasserstoffelektrode (RHE = reverse hydrogen electrode), oder auch eine dynamische Wasserstoffelektrode (DHE = dynamic hydrogen electrode), bei der ein Elektrolytpotential gemessen wird.

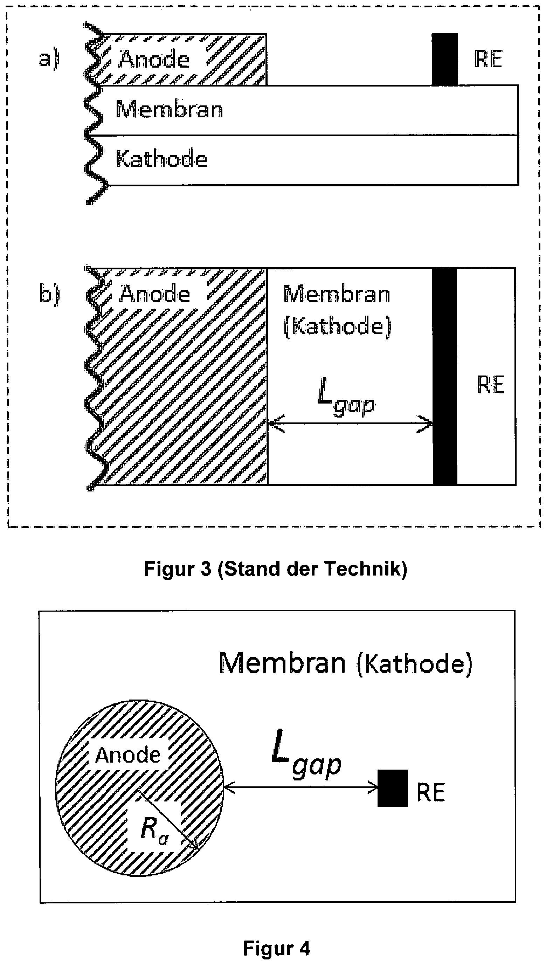

Im Unterschied zu der Anordnung aus A. A. Kulikovsky und P. Berg (DE 102015001572.9), die in Figur 3 als Querschnitt (a) und als Draufsicht (b) dargestellt ist, zeigt die Gegenelektrode in der erfindungsgemäßen Ausgestaltung der Erfindung gegenüber der Referenzelektrode nicht mehr nur eine gerade Kante, sondern weist in der Draufsicht zumindest in einem Kantenbereich, der der Referenzelektrode am Nächsten angeordnet ist, einen konvexen Krümmungsbereich mit einem kleinen Krümmungsradius $R_a$ auf. Dies ist in erster Näherung dann erfüllt, wenn die Anode selbst in Form einer konzentrischen Scheibe ausgestaltet ist, wie in Figur 4 zu sehen.

Der konvex gekrümmte Bereich der Gegenelektrode mit einem Krümmungsradius $R_a$ hat gegenüber den bislang beschriebenen geraden Kanten einer Gegenelektrode gemäß Figur 3 den Vorteil, dass der Mindestabstand $L_{gap}$, in dem die Referenzelektrode von der Gegenelektrode angeordnet wird, nun deutlich geringer ausfällt als der entsprechende Abstand $L_{gap}$ in der Anordnung gemäß der Figur 4, und dass dennoch die Überspannung der Arbeitselektrode, insbesondere der Kathode, mit ausreichender Genauigkeit ermittelt werden kann. Dies ist insbesondere bei kleinen Brennstoffzellen von entscheidender Wichtigkeit.

Die Referenzelektrode kann bei der erfindungsgemäßen Anordnung vorteilhaft sehr klein ausgestaltet sein. Dadurch kann sichergestellt werden, dass die Spitze des konvex gekrümmten Bereichs der Gegenanode der nächstliegende Bereich der Gegenelektrode ist. Andernfalls könnte das Membranpotential am Ort der Referenzelektrode durch Beiträge von fernliegenden Bereichen der Anode beeinträchtigt werden.

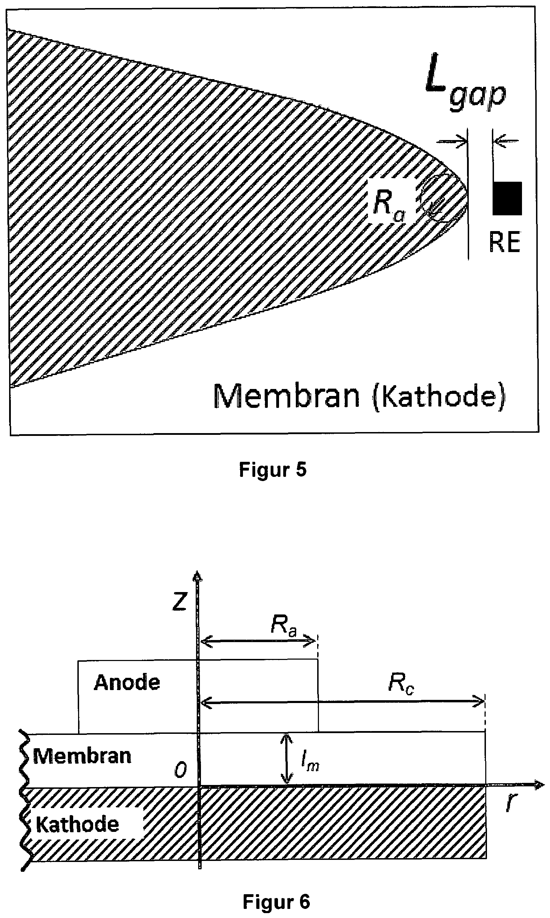

In einer ersten Ausgestaltung der Erfindung (Figur 5) weist die Gegenelektrode eine weitgehend konvexe Kante auf, die eine Spitze mit dem Radius $R_a$ aufweist, in dessen unmittelbarer Nähe die Referenzelektrode mit dem Mindestabstand $L_{gap}$ angeordnet ist.

Bei dieser Anordnung der Gegenelektrode kann der Abstand $L_{gap}$ sehr viel kleiner gewählt werden, was vorteilhaft zu einem sehr viel kompakteren Aufbau mit der Referenzelektrode führt. Dennoch wird durch eine solche Anordnung vorteilhaft ermöglicht, dass das an der Referenzzelle gemessene Potential mit ausreichender Genauigkeit der Überspannung der Kathode entspricht.

Während der eigentlichen Messung zur Ermittlung der Überspannung wird die Referenzelektrode mit Wasserstoff gespeist. Der Gegen- und der Arbeitselektrode werden je nach Schaltung als Anode bzw. Kathode ein Betriebsmittel und ein Oxidationsmittel zugeführt. Während der Messung wird das Potential der Referenzzelle gegenüber der geerdeten Gegenelektrode gemessen.

Dabei werden eine PEM-Brennstoffzelle üblicherweise mit Wasserstoff und Luft bzw. Sauerstoff, eine DMFC mit Methanol bzw. mit einem Methanol-Wassergemisch und Luft bzw. Sauerstoff, und eine SOFC-Brennstoffzelle mit Wasserstoff und Luft bzw. Sauerstoff betrieben.

Insbesondere für die Fallgestaltung, dass die Gegenelektrode als Anode und die Arbeitselektrode als Kathode geschaltet sind, entspricht das gemessene Potential der Referenzzelle mit ausreichender Genauigkeit der Überspannung der Kathode.

Spezieller Beschreibungsteil

Zur weiteren Verdeutlichung der Erfindung dienen zudem einige ausgewählte Figuren, die aber keine Einschränkung des Gegenstandes der Erfindung bedeuten sollen. Es zeigen:

Fig. 1: Beispielhafte schematische Brennstoffzellenanordnung mit einer Referenzelektrode (aus dem Stand der Technik).

Fig. 2: Beispielhafte schematische Brennstoffzellenanordnung mit einer Referenzelektrode (aus dem Stand der Technik).

Fig. 3: Beispielhafte schematische Brennstoffzellenanordnung mit einer Referenzelektrode (aus dem Stand der Technik) in Seitenansicht a) und als Draufsicht b).

Fig. 4: Schematische Brennstoffzellenanordnung in Draufsicht mit einer konzentrischen Gegenelektrode.

Fig. 5: Schematische Draufsicht einer erfindungsgemäßen Ausgestaltung einer Brennstoffzellenanordnung mit einer Anode mit einem konvex gekrümmten Kantenbereich in nächster Nähe zu einer Referenzelektrode.

Fig. 6: Beispielhafte schematische Brennstoffzellenanordnung mit einer konzentrischen Anode mit Radius $R_a$ und einer (unendlichen) konzentrischen Kathode mit Radius $R_c$ als Basis für die Modellrechnungen.

Fig. 7: Verlauf des Potentials der Sauerstoffreduktionsreaktion in Abhängigkeit von der radialen Position normiert auf die Membranschichtdicke $l_m$ für den angegebenen normierten Anodenradius $R_a/l_m$ gemäß dem Modell aus Figur 7.

Fig. 8 Membranpotential $\Phi^+$ und lokale Überspannung auf der Kathodenseite $\eta_c^+$ im Bereich um die Anodenkante jeweils aufgetragen gegen den normierten radialen Abstand von der Kante der Anode (konkav gekrümmter Kantenbereich), am Beispiel einer PEM-FC.

Fig. 9: Normalisierter Abstand von der Anodenkante bis zu dem Punkt, an dem die Überspannungen der Sauerstoffreduktionsreaktion auf den Wert der ORR Tafel-Steigung $b_{ox}$ als Funktion des normierten Anodenradius abfällt.

Nachfolgend werden das Brennstoffzellenmodell und grundlegende Gleichungen erläutert, die der numerischen Berechnung als Basis für das erfindungsgemäße Brennstoffzelldesign zugrunde liegen.

Dabei werden die folgenden Zeichen verwendet:

$b$ kennzeichnet dimensionslose Variablen Tafel Steigung der Halbzelle für die anodische bzw. kathodische Reaktion (V)

$E^{eq}$    Gleichgewichtspotential einer Halbzelle (V)

$F$    Faraday Konstante,

$J$    mittlere Stromdichte im Arbeitsbereich (A cm$^{-2}$)

$j_a$    lokale Protonen-Stromdichte auf der Anodenseite (A cm$^{-2}$)

$j_c$    lokale Protonen-Stromdichte auf der Kathodenseite (A cm$^{-2}$)

$j_{hy}$    Wasserstoff Austauschstromdichte (A cm$^{-2}$)

$j_{hy}^0$    Wasserstoff Austauschstromdichte im Arbeitsbereich (A cm$^{-2}$)

$j_{ox}$    Sauerstoff Austauschstromdichte (A cm$^{-2}$)

$j_{ox}^0$    Sauerstoff Austauschstromdichte im Arbeitsbereich (A cm$^{-2}$)

$L_{gap}$    Mindestabstand zwischen der Kante der Gegenelektrode und der Kante der Referenzelektrode

$L_{1,x}$    Abstand zwischen der geraden Kante der Gegenelektrode und dem Punkt, an dem $\eta_c^+ = b_{ox}$ (cm)

$L_{1,r}$    radialer Abstand zwischen der Kante der Gegenelektrode und dem Punkt, an dem $\eta_c^+ = b_{ox}$ (cm)

$l_m$    Membranschichtdicke (cm)

$r$    radiale Position

$R_a$    Anodenradius

$R_c$    Kathodenradius

$z$    Koordinate senkrecht zur Membranoberfläche (cm)

Dabei werden die folgenden tiefgestellten Indizes verwendet:

$a$    Anode

c    Kathode

$HOR$    Wasserstoffoxidationsreaktion (engl. hydrogen oxidation reaction)

$hy$    Wasserstoff

$m$    Membran

$ORR$    Sauerstoffreduktionsreaktion (engl. oxygen reduction reaction)

$ox$    Sauerstoff

$ref$    Referenzelektrode

$x$    System mit einer geraden Kante der Gegenelektrode (counter electrode)

Ferner werden die folgenden hochgestellten Indizes verwendet:

+    positiver Wert

0    Zentrum der konzentrischen Gegenelektrode ($\tilde{r}$ = 0)

∞    für einen unendlichen Radius

Zudem werden die nachfolgend aufgeführten griechischen Zeichen verwendet:

$\eta$    lokale Überspannung (V)

$\eta_c^{+,0}$    positive Kathodenüberspannung bei $r$ = 0 (V)

$\sigma_m$    ionische Leitfähigkeit der Membran ($\Omega^{-1}$ cm$^{-1}$)

$\Phi$    Membranpotential (V)

$\Phi^+$    positives Membranpotential (V)

$\Phi^{+,\infty}$    positives Membranpotential für $r \rightarrow \infty$ (V)

$\phi$    Potential der Kohlenstoffphase (V)

Tabelle 1 Ausgewählte physikalische Parameter für die Berechnungen

| ORR Austauschstromdichte | $j_{ox}^\infty$ | A cm$^{-2}$ | 10$^{-6}$ |
|---|---|---|---|
| ORR Gleichgewichtspotential | $E_{ox}^{eq}$ | V | 1,23 |
| ORR Tafel-Steigung der Halbzelle | $b_{ox}$ | v | 0,03 |

(fortgesetzt)

| | | | |
|---|---|---|---|
| HOR Austauschstromdichte im Arbeitsbereich | $\dot{j}_{hy}^0$ | A cm$^{-2}$ | 1,0 |
| HOR Tafel-Steigung der Halbzelle | $b_{hy}$ | V | 0,015 |
| Membranschichtdicke | $l_m$ | cm | 0,005 (50 μm) |
| Protonenleitfähigkeit der Membran | $\sigma_m$ | $\Omega^{-1}cm^{-1}$ | 0,1 |
| Zell potential | $\phi_c$ | V | 0,82642 |
| Mittlere Stromdichte im Arbeitsbereich | $J$ | A cm$^{-2}$ | 1 |

1. Zellmodell und Grundgleichungen

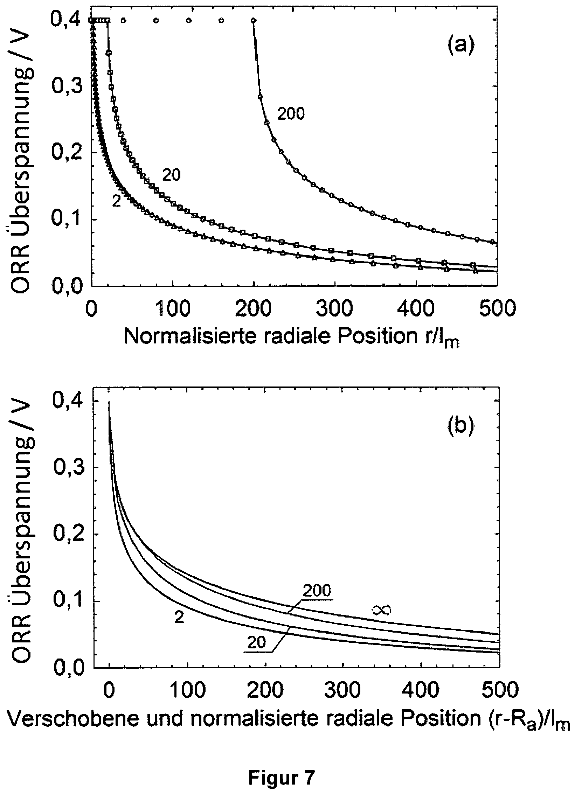

Es wird eine PEM-FC mit konzentrischen Elektroden betrachtet, die eine Geometrie und ein Koordinatensystem aufweisen, wie es in der Figur 6 dargestellt ist. Auf beiden Seiten der Polymerelektrolyt-Membran mit der Schichtdicke $l_m$ sind die Elektroden angeordnet, eine großflächige Kathode sowie einen kleine Anode. Zwischen den Elektroden und der Membran befindet sich regelmäßig (in Figur 7 nicht dargestellt) eine entsprechende Katalysatorschicht, insbesondere die anodische Katalysatorschicht (ACL= anode catalyst layer) sowie die kathodische Katalysatorschicht (CCL= cathode catalyst layer).

Das Zentrum der konzentrischen Anode entspricht dann $r = 0$ und für die konvexe Kante der Anode zur Aussparung hin gilt $r = R_a$. Die Kathode kann in diesem Modell ebenfalls als konzentrische Elektrode mit einem Radius $R_c$ mit $R_c \rightarrow \infty$ betrachtet werden. Der Bereich $R_a < r \leq R_c$ bzw $\infty$ wird als Anoden-freier Bereich (Aussparung) und der Bereich für $0 \leq r \leq R_a$ als Arbeitsbereich bezeichnet. Diese Anordnung ist schematisch in der Figur 6 dargestellt.

Es wurde ein Modell für eine Verteilung der Kathodenüberspannung $\eta_c$ und des Membranpotentials $\Phi$ in dem Anoden-freien Bereich der Brennstoffzelle entwickelt. Mathematisch führt das Problem zu der axial-symmetrischen Poisson-Boltzmann Gleichung für die Kathodenüberspannung $\eta_c$. Die Lösung dieses Problems zeigt, dass der Anoden-freien Bereich $|\eta_c|$ einen rapiden Abfall auf Null in Abhängigkeit vom Radius zeigt, während $|\Phi|$ schnell auf den Wert von $\left|\eta_c^0\right|$ der Kathodenüberspannung im Arbeitsbereich der Zelle ansteigt. Je kleiner der Radius der konzentrischen Anode $R_a$ ist, desto schneller erreicht das Membranpotential $\Phi$ der Wert der Kathodenüberspannung im Arbeitsbereich $\eta_c^0$.

Daraus folgt, dass die Referenzzelle (RE) zur Messung der kathodischen Überspannung zwischen den Arbeitselektroden (oder der Arbeits- und der Gegenelektrode) umso näher an den konvex gekrümmten Kantenbereich der Anode positioniert werden kann, je kleiner der lokale Radius $R_a$ dieses Bereichs ist.

Es wird der Fall betrachtet, dass sich die konzentrische Kathode mit einem Radius $R_c$ als Arbeitselektrode über den gesamten Bereich der Membran erstreckt (endlos) und die Anode als Gegenelektrode jedoch nur einen Teil der Oberfläche der Membran kontaktiert. Das Zentrum der Anode entspricht $r = 0$. Die Anode weist eine konzentrische Geometrie mit dem Radius $R_a$ auf, wobei $R_a < R_c$ ist. Damit ergibt sich auf der Anodenseite auf der nicht durch die Anode kontaktierten Fläche der Elektrolytmembran eine Art Aussparung bzw. ein Anoden-freier Bereich.

Analog kann natürlich auch der Fall betrachtet werden, bei dem die Anode die Arbeitselektrode darstellt, und eine konzentrische Kathode als Gegenelektrode vorliegt.

Ziel ist es zunächst, die Stromverteilung und die Potentiale in diesem System zu verstehen. Die Hauptvariable dieser Problemstellung ist das Membranpotential $\Phi$, welches der Poisson-Gleichung folgt

$$\frac{1}{r}\frac{\partial}{\partial r}\left(r\frac{\partial \Phi}{\partial r}\right) + \frac{\partial^2 \Phi}{\partial z^2} = 0 \tag{1}$$

Eine unendlich große Kathode bedeutet dabei, dass der Kathodenradius um viele Größenordnungen größer ist, als die Membranschichtdicke $l_m$. Diese Annahme erlaubt es, die zweite Ableitung entlang der z-Achse in Gleichung 3 durch die Differenz der Protonenstromdichte in die Membran und aus dieser heraus zu ersetzen, was zu folgender Gleichung führt:

8

$$\frac{1}{r}\frac{\partial}{\partial r}\left(r\frac{\partial \Phi}{\partial r}\right) = \frac{j_c - j_a}{\sigma_m l_m} \tag{2}$$

Hierbei entsprechen $j_a$ und $j_c$ den Stromdichten an der Anoden- und der Kathodenseite der Membran. Zudem wird vermutet, dass $j_a$ und $j_c$ der Butler-Volmer Kinetik folgen.

$$j_a = 2\, j_{hy} \sinh\left(\frac{\eta_a}{b_{hy}}\right) \text{ und} \tag{1}$$

$$j_c = 2\, j_{ox} \sinh\left(-\frac{\eta_c}{b_{ox}}\right). \tag{2}$$

Hierbei bedeuten $j_{hy}$ und $j_{ox}$ jeweils die entsprechenden Oerflächen-Austauschstromdichten der anodischen Katalysatorschicht (ACL) und der kathodischen Katalysatorschicht (CCL), $\eta_a$ und $\eta_c$ sind die entsprechenden lokalen Elektroden-Überspannungen an der Anode und der Kathode und $b_{hy}$ und $b_{ox}$ sind die dazu korrespondierenden Tafel-Steigungen der entsprechenden Halbzellenreaktion. Da angenommen wird, dass die Transportverluste klein sind, ist die Abhängigkeit von der Reaktandenkonzentration bereits in $j_{hy}$ und $j_{ox}$ enthalten.

Die Halbzellenüberspannungen ergeben sich jeweils aus

$$\eta_a = \phi_a - \Phi - E_{HOR}^{eq} \tag{3}$$

$$\eta_c = \phi_c - \Phi - E_{ORR}^{eq} \tag{4}$$

wobei $\phi_a$ und $\phi_c$ die Elektrodenpotentiale und $E_{HOR}^{eq} = 0\ \text{V}$ und $E_{ORR}^{eq} = 1{,}23\ \text{V}$ die Gleichgewichtspotentiale der entsprechenden Halbzellenreaktionen darstellen. Es wird angenommen, dass die Anode geerdet ist ($\phi_a$) = 0 und daher $\phi_c$ das Zellenpotential darstellt.

Durch Einfügen von Gl. (3) bis Gl. (6) in Gl. (2) und Einführung der dimensionslosen Variablen

$$\tilde{r} = \frac{r}{l_m}, \quad \tilde{j} = \frac{j\, l_m}{\sigma_m b_{ox}}, \quad \tilde{\Phi} = \frac{\Phi}{b_{ox}}, \quad \tilde{\phi} = \frac{\phi}{b_{ox}}, \quad \tilde{b}_{hy} = \frac{b_{hy}}{b_{ox}} \tag{5}$$

erhält man

$$\frac{1}{\tilde{r}}\frac{d}{d\tilde{r}}\left(\tilde{r}\frac{d\tilde{\Phi}}{d\tilde{r}}\right) = 2\tilde{j}_{ox}^{0}\sinh\left(-\tilde{\phi}_c + \tilde{\Phi} + \tilde{E}_{ORR}^{eq}\right) - 2\tilde{j}_{hy}^{0} H(\tilde{R}_a - \tilde{r})\sinh\left(-\tilde{\Phi}/\tilde{b}_{hy}\right) \tag{6}$$

Hierbei entspricht $\tilde{j}_{ox}^{o}$ mt dem hochgestellten Zeichen 0 dem Wert im Zentrum der konzentrischen Arbeitselektrode (Kathode). H bedeutet die Heaviside Funktion, welche in dem Arbeitsbereich den Wert 1 und in dem Anoden-freien Raum den Wert 0 annimmt. Das Nichtvorhandensein von anodischem Katalysator außerhalb des Arbeitsbereichs wird dadurch berücksichtigt, dass die Austauschstromdichte der Wasserstoff-Oxidationsreaktion (HOR = hydrogen oxidation reaction) gleich Null gesetzt wird.

Im Rahmen der Erfindung wurde nun die Verteilung des Membranpotentials $\Phi$ in dem Anoden-freien Bereich untersucht. In diesem Bereich verschwindet die Stromproduktion auf der Anodenseite und die Gleichung (8) vereinfacht sich zu

$$\frac{1}{\tilde{r}}\frac{d}{d\tilde{r}}\left(\tilde{r}\frac{d\tilde{\Phi}}{d\tilde{r}}\right) = 2\tilde{j}_{ox}^{0}\sinh\left(-\tilde{\phi}_{c} + \tilde{\Phi} + \tilde{E}_{ORR}^{eq}\right) \qquad (9)$$

Nun ist es möglich, diese Gleichung als Funktion der Kathodenüberspannung gemäß der Gleichung (6) darzustellen. Dies führt als dimensionslose Gleichung zu

$$\tilde{\eta}_{c} = \tilde{\phi}_{c} - \tilde{\Phi} - \tilde{E}_{ORR}^{eq} \qquad (10)$$

Wird dies in Gleichung (9) eingesetzt, erhält man

$$\frac{1}{\tilde{r}}\frac{d}{d\tilde{r}}\left(\tilde{r}\frac{d\tilde{\eta}_{c}}{d\tilde{r}}\right) = \kappa^{2}\sinh\tilde{\eta}_{c} \qquad (11)$$

mit

$$\kappa = \sqrt{2\tilde{j}_{ox}^{0}} \qquad (12)$$

Durch Einführung der positiven Überspannung

$$\tilde{\eta}_{c}^{+} = -\tilde{\eta}_{c} > 0 \qquad (13)$$

ergibt sich für $\tilde{\eta}_{c}^{+}$ die Gleichung:

$$\frac{1}{\tilde{r}}\frac{d}{d\tilde{r}}\left(\tilde{r}\frac{d\tilde{\eta}_{c}^{+}}{d\tilde{r}}\right) = \kappa^{2}\sinh\tilde{\eta}_{c}^{+} \qquad (14)$$

2. Rahmenbedingungen

Es konnte gezeigt werden, dass in Polymer-Elektrolyt-Brennstoffzellen auf Grund der sehr großen Austauschstromdichte der Wasserstoff-Oxidationsreaktion (HOR) das Kathodenpotential $\tilde{\eta}_{c}$ an der Anodenkante sehr nahe an den bulk-Potentialwert im Arbeitsbereich gemäß Gl. 7 heran kommt. Daher ist für ein System mit einer axialen Symmetrie zu erwarten, dass $\tilde{\eta}_{c}^{+}(\tilde{R}_{a}) \cong \eta_{c}^{+0}$ ist, wobei $\tilde{\eta}_{c}^{+0} \equiv \tilde{\eta}_{c}^{+}(0) = -\tilde{\eta}_{c}(0)$ die Überspannung der Sauerstoff-Reduktionsreaktion (ORR) im Zentrum der Symmetrieachse ist. Numerische Tests bestätigen diese Annahme. Dadurch kann dann aber der Arbeitsbereich vorteilhaft aus der Betrachtung herausgenommen werden, indem das Potential $\tilde{\eta}_{c}^{+}(\tilde{R}_{a}) = \eta_{c}^{+0}$ an die Kante der Anode gelegt wird. Hierdurch ergeben sich die Rahmenbedingung für die Gl. 14 zu

$$\tilde{\eta}_{c}^{+}(\tilde{R}_{a}) = \tilde{\eta}_{c}^{+0}, \qquad \left.\frac{d\tilde{\eta}_{c}^{+}}{d\tilde{r}}\right|_{\tilde{r}=\infty} = 0 \qquad (15)$$

Die zweite Gleichung bedeutet dabei, dass die Protonenstromdichte entlang $\tilde{r}$ für $\infty$ gegen Null geht. Die Tatsache einer unendlichen Kathode ist näherungsweise gegeben, wenn die folgende Bedingung erfüllt ist $\kappa\tilde{R}_{c} \gg 1$. Die Bedingung ist jedoch redundant. Eine detailliertere Analyse zeigt, dass die Näherung mit einer unendlichen Kathode gut funktioniert, solange

$$R_c \geq 3L_{1,r} \qquad\qquad (16)$$

wobei $L_{1,r}$ gegeben ist durch Gl. 18. Eine solche Bedingung kann für Brennstoffzellen im Labormaßstab regelmäßig als gegeben angesehen werden.

3. Unterschiedliche anodische Radien $R_a$

In Figur 7 sind die Lösungen für die Gleichung 14 für unterschiedliche Anodenradien $R_a$ dargestellt. Die besondere Eigenschaft dieses Problems ist, dass sehr nahe an der Anodenkante der Gradient des Potentials der Sauerstoff-Reduktionsreaktion (ORR) $\eta_c^+$ mit kleiner werdendem Anodenradius ansteigt. Qualitativ ähnelt dies dem Verhalten des Laplace-Potentials zwischen einer geladenen Metallspitze und einer Ebene: je schmaler der Radius der metallischen Spitze ist, umso stärker fällt das Potential in der Nähe der Spitze in Abhängigkeit von der Achensymmetrie ab.

Die praktische Bedeutung, die sich aus der Figur 7 ableiten lässt, ist die, dass in einer Brennstoffzellenanordnung mit einer großflächigen Kathode und einer konzentrischen Anode die Referenzelektrode (RE) umso näher an die Anode heran angeordnet werden kann, je kleiner der Radius der Anode ist. Dies unter der Voraussetzung, dass mit dieser Anordnung die kathodische Überspannung mit ausreichender Genauigkeit ermittelt werden soll und kann.

4. Position der Referenzelektrode

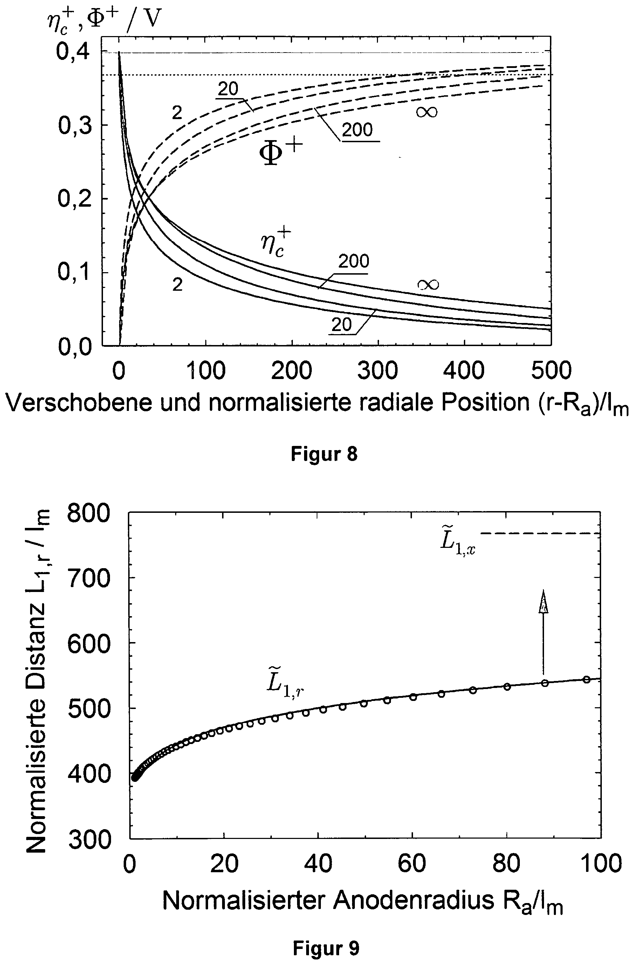

Aus der Figur 8 wird ersichtlich, dass sich das positive Membranpotential $\Phi^+$ mit kleiner werdendem Anodenradius $R_a$ schneller dem Grenzwert $\eta_c^{+,0}$ annähert. Ebenfalls erkennbar aus Figur 8 ist die radiale Breite des durch die Sauerstoff-Reduktionsreaktion dominierten Bereichs $\tilde{L}_{1,r}$. Diese radiale Breite wächst mit ansteigendem Anodenradius $R_a$.

Für weitere Abschätzungen wird die Annahme getroffen, dass die Referenzelektrode (RE) in einem Abstand $\tilde{L}_{1,r}$ von der zumindest teilweise konvex gekrümmten Anodenkante mit dem lokalen Radius $R_a$ entfernt angeordnet ist.

Die Figur 8 zeigt, dass diese Annahme zu einer 10 % Genauigkeit in der Bestimmung von $\eta_c^+$ führt. Es ist ratsam, diesen Abstand $\tilde{L}_{1,r}$ (Figur 9, durchgezogene Linie) mit dem analogen Abstand $\tilde{L}_{1,x}$ für eine gerade Anodenkante gemäß der Figur 3 zu vergleichen. Die gestrichelte Linie in der Figur 9 stellt den Wert von $\tilde{L}_{1,x}$ dar. Physikalisch ist $\tilde{L}_{1,x}$ eine Asymptote, der sich die $\tilde{L}_{1,r}$-Kurve für $\tilde{R}_a \to \infty$ annähert (Figur 9). Für sehr kleine Radien der Anode, d. h. für $\tilde{R}_a \leq 10$, ist der radiale Abstand $\tilde{L}_{1,r}$ zwischen der gekrümmten Anodenkante und der Referenzelektrode nur noch halb so klein wie der Abstand

$$\tilde{L}_{1,x} \cong \frac{1,4}{\kappa}$$

bei der entsprechenden Anodengeometrie mit einer geraden Kante, wie sie in Figur 4 dargestellt ist. Aber selbst bei größeren Radien, z. B. für $\tilde{R}_a \approx 100$ (rechter Rand in Figur 9), ist der radiale Abstand $\tilde{L}_{1,r}$ zwischen der gekrümmten Anodenkante und der Referenzelektrode immer noch fast 30 % kleiner als der Abstand $\tilde{L}_{1,x}$, wie er sich bei der entsprechenden Anodengeometrie mit einer geraden Kante ergeben würde.

Es ist zu beachten, dass für sehr kleine Anodenradien der Abstand $\tilde{L}_{1,r}$ stark abnimmt. Für den Bereich von $\tilde{R}_a \leq 1$ ist es fraglich, ob das zugrunde liegende Model noch angewendet werden kann, da mögliche starke 2-dimensionalen Effekte in nächster Nachbarschaft zur konkav gekrümmten Anodenkante hierbei ignoriert werden. Für den optimalen minimalen Abstand wäre demnach ein $\tilde{R}_a$ vorteilhaft im Bereich von 2 bis 3 zu wählen.

Ein möglicher Ausdruck, der die Abhängigkeiten von $\tilde{L}_{1,r}$ als Funktion von $\tilde{R}_a$ im Bereich von $0 \leq \kappa\tilde{R}_a \leq 1$ beschreibt, ist gegeben durch

$$\tilde{L}_{1,r} \cong \frac{\pi}{2\kappa}\left[\ln\left(\frac{67}{18\left(\kappa\tilde{R}_a\right)^{7/45}}\right)\right]^{-1} \quad \text{für } 0 \leq \kappa\tilde{R}_a \leq 1 \qquad\qquad (17)$$

und in Figur 9 durch offene Kreise dargestellt. In der dimensionslosen Schreibweise führt dies zur folgenden Gleichung

$$L_{1,r} \cong \frac{\pi\lambda_D}{2}\left[\ln\left(\frac{67}{18(R_a / \lambda_D)^{7/45}}\right)\right]^{-1} \text{, mit} \qquad \lambda_D = \sqrt{\frac{\sigma_m b_{ox} l_m}{2 j_{ox}^0}} \qquad (18)$$

Diese Gleichung 18 kann vorteilhaft dazu genutzt werden, um den benötigten Mindestabstand $L_{gap}$ zwischen der Anodenspitze (konvex gekrümmter Kantenbereich) mit dem lokalen Radius $R_a$ und der Referenzelektrode entwicklungsmäßig in einer Anwendung abzuschätzen. Sofern eine gewisse Genauigkeit der Messungen gefordert ist, sollte $L_{gap} \cong 3 \cdot L_{1,r}$ als Mindestabstand eingesetzt werden.

In den Figuren 4 und 5 sind mögliche Anordnungen für eine Brennstoffzellemit jeweils mit einer Referenzelektrode dargestellt. Die Figur 3 zeigt die Anordnung einer Referenzzelle in einer Brennstoffzelle mit einer geraden Anodenkante gemäß dem Stand der Technik. In diesem Fall ergibt sich der Mindestabstand zu

$$L_{gap} \cong 3 \cdot \lambda_D, \qquad \text{mit} \qquad \lambda_D = \sqrt{\frac{\sigma_m b_{ox} l_m}{2 j_{ox}^0}} \ .$$

Die Figur 5 zeigt demgegenüber den Fall für eine Ausgestaltung der erfindungsgemäßen Anordnung, bei der die Anode einen konvex gekrümmten Kantenbereich in nächster Näher zur Referenzelektrode aufweist. Hierbei gilt für den Mindestabstand $L_{gap} \cong 3 \cdot \tilde{L}_{1,r}$ wobei $\tilde{L}_{1,r}$ gegeben ist durch die Gleichung 18. Man beachte, dass in Figur 5 $L_{gap}$ kleiner ist, als in der Figur 3. Die Figur 5 zeigt eine Brennstoffzellenanordnung mit einer Anodenkante, die eine konvex gekrümmte Spitze aufweist. Diese Spitze bewirkt ein starkes und schnelles Anwachsen des Membranpotentials $\Phi^+$ mit steigender Entfernung von der Spitze weg. Daher kann in diesem Fall die Referenzelektrode sehr nah an die Spitze heran angeordnet werden, ohne die Genauigkeit der Messung zu stören. Der Wert des Abstandes $L_{gap}$ in Figur 5 kann leicht bestimmt werden durch Gleichung 18, indem für $R_a$ der lokale Radius der Anodenspitze eingesetzt wird.

Mit den Parametern aus der Tabelle 1 und einem Anodenradius $R_a$ = 0,01 cm würde man aus Gl. 18 einen Abstand $\tilde{L}_{1,r}$ = 1,97 cm erhalten. Für eine Anordnung mit einer entsprechend geraden Anodenkante würde dasselbe Membranpotential erst bei einem Abstand von $L_{1,x}$ = 3,83 cm erreicht werden. Bei kleineren Anodenradien $R_a$ würde der Vorteil aufgrund der gekrümmten Anodenkante noch weitaus größer ausfallen.

**Patentansprüche**

1. Brennstoffzellenanordnung zur Ermittlung der Überspannung einer Arbeitselektrode in einer Brennstoffzelle,

- umfassend eine Arbeitselektrode, eine Gegenelektrode und eine Referenzelektrode,
- umfassend eine Polymer-Elektrolytmembran mit einer Schichtdicke $l_m$, bei der auf einer Seite die durchgehende Arbeitselektrode und auf der anderen Seite die Gegenelektrode angeordnet ist,
- wobei die Gegenelektrode wenigstens eine seitliche Kante und wenigstens eine konvex gekrümmte Spitze mit einem lokalen Radius $R_a$ aufweist,
- wobei die Elektrolytmembranoberfläche benachbart zur Gegenelektrode und gegenüber der Arbeitselektrode einen Elektroden-freien Bereich aufweist,
- wobei die Referenzelektrode auf der Elektrolytmembranoberfläche gegenüber der Arbeitselektrode im Bereich des Elektroden-freien Bereichs und in unmittelbarer Nähe zur konvex gekrümmten Spitze der Gegenelektrode angeordnet ist,
- wobei die Referenzelektrode in einem Abstand im Bereich $L_{gap}$ bis 100 $L_{gap}$ von der konvex gekrümmten Spitze der Gegenelektrode angeordnet ist und
- wobei der minimale Abstand $L_{gap}$ zwischen der Referenzelektrode und dem konvex gekrümmten Kantenbereich der Gegenelektrode gegeben ist durch

$$L_{gap} = 3 \cdot L_{1,r}$$

mit

$$L_{1,r} \cong \frac{\pi\lambda_D}{2}\left[\ln\left(\frac{67}{18\left(R_a/\lambda_D\right)^{7/45}}\right)\right]^{-1} \quad \text{und} \quad \lambda_D = \sqrt{\frac{\sigma_m b_{ox} l_m}{2j_{ox}^0}}$$

mit

$\sigma_m$ = ionische Leitfähigkeit der Elektrolytmembran ($\Omega^{-1}$ cm$^{-1}$),

$b_{ox}$ = Tafel-Steigung der Halb-Zelle für die elektrochemische Reaktion der Arbeitselektrode (V),

$l_m$ = Membranschichtdicke (cm),

$j_{ox}^0$ = Austauschstromdichte des Katalysators der Arbeitsektrode pro Einheit Elektrodenoberfläche in (A cm$^{-2}$), und

$R_a$ = lokaler Radius der konvex gekrümmten Spitze der Gegenelektrode (cm), die der Referenzelektrode am nächsten ist.

2. Brennstoffzellenanordnung nach Anspruch 1,
bei der die Referenzelektrode in einem Abstand im Bereich zwischen $L_{gap}$ bis 10 $L_{gap}$ und insbesondere im Bereich $L_{gap}$ bis 3 $L_{gap}$ von der konvex gekrümmten Spitze der Gegenelektrode angeordnet ist.

3. Brennstoffzellenanordnung nach einem der Ansprüche 1 bis 2,
mit einer Kathode als Arbeitselektrode und einer Anode als Gegenelektrode.

4. Brennstoffzellenanordnung nach einem der Ansprüche 1 bis 3,
bei dem die konvex gekrümmte Spitze einen lokalen Radius $R_a$ zwischen 0,01 und 1 cm, insbesondere von kleiner 0,1 cm aufweist.

5. Brennstoffzellenanordnung nach einem der Ansprüche 1 bis 4,
bei dem die Ausdehnung der durchgehenden Arbeitselektrode größer als $3\lambda_D$ ist.

6. Verfahren zur Ermittlung der Überspannung einer Arbeitselektrode in einer Brennstoffzelle, **dadurch gekennzeichnet,**

- **dass** für die Messung eine Brennstoffzelle gemäß einem der Ansprüche 1 bis 5 eingesetzt wird und
- der Abstand zwischen der Referenzelektrode und der konvex gekrümmten Spitze der Gegenelektrode im Bereich zwischen $L_{gap}$ und 100 $L_{gap}$ gewählt wird,
- wobei der Mindestabstand für $L_{gap}$ gegeben ist durch

$$L_{gap} = 3 \cdot L_{1,r}$$

mit

$$L_{1,r} \cong \frac{\pi\lambda_D}{2}\left[\ln\left(\frac{67}{18\left(R_a/\lambda_D\right)^{7/45}}\right)\right]^{-1} \quad \text{und} \quad \lambda_D = \sqrt{\frac{\sigma_m b_{ox} l_m}{2j_{ox}^0}}$$

mit

$\sigma_m$ = ionische Leitfähigkeit der Elektrolytmembran ($\Omega^{-1}$ cm$^{-1}$),

$b_{ox}$ = Tafel-Steigung der Halb-Zelle für die elektrochemische Reaktion der Arbeitselektrode (V),

$l_m$ = Membranschichtdicke (cm),

$j_{ox}^0$ = Austauschstromdichte des Katalysators der Arbeitselektrode pro Einheit Elektrodenoberfläche in (A cm$^{-2}$), und

$R_a$ = Radius der konvex gekrümmten Spitze der Gegenelektrode (cm).

7. Verfahren nach Anspruch 6,
bei dem der Abstand zwischen der Referenzelektrode und der konvex gekrümmten Spitze der Gegenelektrode im Bereich $L_{gap}$ bis 10 $L_{gap}$ und besonders vorteilhaft im Bereich zwischen $L_{gap}$ bis 3 $L_{gap}$ gewählt wird.

8. Verfahren nach einem der Ansprüche 6 bis 7,
bei dem die Referenzelektrode während des Verfahrens mit Wasserstoff versorgt wird.

9. Verfahren nach einem der Ansprüche 6 bis 8,
bei dem als Gegenelektrode eine Anode und als Arbeitselektrode eine Kathode eingesetzt werden.

10. Verfahren nach einem der Ansprüche 6 bis 9,
bei dem für den lokalen Krümmungsradius der konvex gekrümmten Spitze der Gegenelektrode ein Wert zwischen 0,01 und 1 cm, insbesondere von kleiner 0,1 cm gewählt wird.

11. Verfahren nach einem der Ansprüche 6 bis 10,
bei dem eine Polymer-Elektrolyt-membran-Brennstoffzelle (PEM-FC), eine Direktmethanol-Brennstoffzelle (DMFC) oder eine Hochtemperatur-Brennstoffzelle (SOFC oder HT-PEM-FC) als Brennstoffzelle eingesetzt wird.

**Claims**

1. Fuel cell arrangement for determining the overvoltage of a working electrode in a fuel cell,

   - comprising a working electrode, a counter electrode and a reference electrode,
   - comprising a polymer electrolyte membrane with a layer thickness $l_m$, in which the continuous working electrode is arranged on one side and the counter electrode is arranged on the other side,
   - in which the counter electrode has at least one side edge and at least one convex curved tip with a local radius $R_a$,
   - in which the electrolyte membrane surface has an electrode-free area next to the counter electrode and opposite the working electrode,
   - in which the reference electrode is arranged on the electrolyte membrane surface opposite the working electrode in the area of the electrode-free area and right next to the convex curved tip of the counter electrode,
   - in which the reference electrode is arranged at a distance in the range $L_{gap}$ to 100 $L_{gap}$ from the convex curved tip of the counter electrode and
   - in which the minimum distance $L_{gap}$ between the reference electrode and the convex curved edge area of the counter electrode is given by

$$L_{gap} = 3 \cdot L_{1,r}$$

   with

$$L_{1,r} \cong \frac{\pi \lambda_D}{2} \left[ \ln\left( \frac{67}{18(R_a / \lambda_D)^{7/45}} \right) \right]^{-1} \quad \text{and} \quad \lambda_D = \sqrt{\frac{\sigma_m b_{ox} l_m}{2 j_{ox}^0}}$$

   with

   $\sigma_m$ = ionic conductivity of the electrolyte membrane ($\Omega^{-1}$ cm$^{-1}$),
   $b_{ox}$ = Tafel slope of the half cell for the electrochemical reaction of the working electrode (V),
   $l_m$ = membrane layer thickness (cm),
   $j_{ox}^0$ = exchange current density of the catalyst of the working electrode per unit of electrode surface in (A cm$^{-2}$), and
   $R_a$ = local radius of the convex curved tip of the counter electrode (cm), which is closest to the reference electrode.

**2.** Fuel cell arrangement according to claim 1,
in which the reference electrode is arranged at a distance in the range from $L_{gap}$ to 10 $L_{gap}$ and particularly in the range $L$ to 3 $L_{gap}$ from the convex curved tip of the counter electrode.

**3.** Fuel cell arrangement according to one of claims 1 to 2,
with a cathode as the working electrode and an anode as the counter electrode.

**4.** Fuel cell arrangement according to one of claims 1 to 3,
in which the convex curved tip has a local radius $R_a$ between 0.01 and 1 cm, particularly less than 0.1 cm.

**5.** Fuel cell arrangement according to one of claims 1 to 4,
in which the extension of the continuous working electrode is greater than $3\lambda_D$.

**6.** Method for determining the overvoltage of a working electrode in a fuel cell, **characterised in that**

- a fuel cell according to one of claims 1 to 5 is used for measuring and
- the distance between the reference electrode and the convex curved tip of the counter electrode is selected in the range between $L_{gap}$ and 100 $L_{gap}$,
- in which the minimum distance for $L_{gap}$ is given by

$$L_{gap} = 3 \cdot L_{1,r}$$

with

$$L_{1,r} \cong \frac{\pi\lambda_D}{2}\left[\ln\left(\frac{67}{18(R_a/\lambda_D)^{7/45}}\right)\right]^{-1} \quad \text{and} \quad \lambda_D = \sqrt{\frac{\sigma_m b_{ox} l_m}{2 j_{ox}^0}}$$

with

$\sigma_m$ = ionic conductivity of the electrolyte membrane ($\Omega^{-1}$ cm$^{-1}$),
$b_{ox}$ = Tafel slope of the half cell for the electrochemical reaction of the working electrode (V),
$l_m$ = membrane layer thickness (cm),
$j_{ox}^0$ = exchange current density of the catalyst of the working electrode per unit of electrode surface in (A cm$^{-2}$), and
$R_a$ = radius of the convex curved tip of the counter electrode (cm).

**7.** Method according to claim 6,
in which the distance between the reference electrode and the convex curved tip of the counter electrode is selected in the range $L_{gap}$ to 10 $L_{gap}$ and particularly advantageously in the range from $L_{gap}$ to 3 $L_{gap}$.

**8.** Method according to one of claims 6 to 7,
in which the reference electrode is supplied with hydrogen during the process.

**9.** Method according to one of claims 6 to 8,
in which an anode is used as the counter electrode and a cathode is used as the working electrode.

**10.** Method according to one of claims 6 to 9,
in which a value between 0.01 and 1 cm, particularly smaller than 0.1 cm, is selected for the local radius of curvature of the convex curved tip of the counter electrode.

**11.** Method according to one of claims 6 to 10,
in which a polymer electrolyte membrane fuel cell (PEM-FC), a direct methanol fuel cell (DMFC) or a high temperature fuel cell (SOFC or HT-PEM-FC) is used as the fuel cell.

**Revendications**

1. Agencement de pile à combustible pour déterminer la surtension d'une électrode de travail d'une pile à combustible,

   - comprenant une électrode de travail, une contre-électrode et une électrode de référence,
   - comprenant une membrane à électrolyte polymère ayant une épaisseur $l_m$ de couche, dans laquelle l'électrode de travail continue est disposée sur une face et la contre-électrode sur l'autre face,
   - dans lequel la contre-électrode a au moins un bord latéral et au moins une pointe incurvée de manière convexe, ayant un rayon $Ra$ local,
   - dans lequel la surface de la membrane à électrolyte a, au voisinage de la contre-électrode et au voisinage de l'électrode de travail, une partie sans électrode,
   - dans lequel l'électrode de référence est disposée sur la surface de la membrane à électrolyte en face de l'électrode de travail, dans la partie de la partie sans électrode et à proximité immédiate de la pointe incurvée de manière convexe de la contre-électrode,
   - dans lequel l'électrode de référence est à une distance dans la plage de $L_{gap}$ à 100 $L_{gap}$ de la pointe incurvée de manière convexe de la contre-électrode et
   - dans lequel la distance $L_{gap}$ minimum, entre l'électrode de référence et la partie de bord incurvée de manière convexe de la contre-électrode, est donnée par

   $$L_{gap} = 3 \cdot L_{1.r}$$

   *avec*

   $$L_{1.r} \cong \frac{\pi \lambda_D}{2} \left[ ln \left( \frac{67}{18(R_a/\lambda_D)^{7/45}} \right) \right]^{-1} \quad \text{et} \quad \lambda_D = \sqrt{\frac{\sigma_m b_{ox} l_m}{2 j_{ox}^0}}$$

   avec

   $\sigma_m$ = conductivité ionique de la membrane à électrolyte ($\Omega^{-1} cm^{-1}$),
   $b_{ox}$ = pente de Tafel de la demi-cellule pour la réaction électrochimique de l'électrode (V) de travail,
   $l_m$ = épaisseur de couche de la membrane (cm),
   $j_{ox}^0$ = densité de courant d'échange du catalyseur de l'électrode de travail par unité de surface d'électrode (A cm$^{-2}$), et
   $R_a$ = rayon local de la pointe incurvée de manière convexe de la contre-électrode (cm), qui est la plus proche de l'électrode de référence.

2. Agencement de pile à combustible suivant la revendication 1, dans lequel l'électrode de référence est à une distance dans la plage comprise entre $L_{gap}$ à 10 $L_{gap}$ et notamment dans la plage de $L_{gap}$ à 3 $L_{gap}$ de la pointe incurvée de manière convexe de la contre-électrode.

3. Agencement de pile à combustible suivant l'une des revendications 1 à 2, comprenant une cathode comme électrode de travail et une anode comme contre-électrode.

4. Agencement de pile à combustible suivant l'une des revendications 1 à 3, dans lequel la pointe incurvée de manière convexe a un rayon $Ra$ local compris entre 0,01 et 1 cm, notamment plus petit que 0,1 cm.

5. Agencement de pile à combustible suivant l'une des revendications 1 à 4, dans lequel l'étendue de l'électrode de travail continue est plus grande que $3\lambda_D$.

6. Procédé de détermination de la surtension d'une électrode de travail d'une pile à combustible, **caractérisé en ce que**

   - on utilise pour la mesure une pile à combustible suivant l'une des revendications 1 à 5 et
   - on choisit la distance entre l'électrode de référence et la pointe incurvée de manière convexe de la contre-électrode dans la plage comprise entre $L_{gap}$ et 100 $L_{gap}$,
- dans lequel la distance minimum pour $L_{gap}$ est donnée par

$$L_{gap} = 3 \cdot L_{1.r}$$

*avec*

$$L_{1.r} \cong \frac{\pi \lambda_D}{2} \left[ ln\left( \frac{67}{18(R_a/\lambda_D)^{7/45}} \right) \right]^{-1} \quad \text{et} \quad \lambda_D = \sqrt{\frac{\sigma_m b_{ox} l_m}{2 j_{ox}^0}}$$

avec

$\sigma_m$ = conductivité ionique de la membrane électrolyte ($\Omega^{-1}cm^{-1}$),
$b_{ox}$ = pente de Tafel de la demi-cellule pour la réaction électrochimique de l'électrode (V) de travail,
$l_m$ = épaisseur de couche de la membrane (cm),
$j_{ox}^0$ = densité de courant d'échange du catalyseur de l'électrode de travail par unité de surface d'électrode (A cm$^{-2}$), et
$R_a$ = rayon local de la pointe incurvée de manière convexe de la contre-électrode (cm).

**7.** Procédé suivant la revendication 6,
dans lequel on choisit la distance entre l'électrode de référence et la pointe incurvée de manière convexe à la contre-électrode dans la plage de $L_{gap}$ à 10 $L_{gap}$, et d'une manière particulièrement avantageuse, dans la plage allant de $L_{gap}$ à 3 $L_{gap}$.

**8.** Procédé suivant l'une des revendications 6 à 7,
dans lequel on alimente en hydrogène l'électrode de référence pendant le procédé.

**9.** Procédé suivant l'une des revendications 6 à 8,
dans lequel on utilise comme contre-électrode une anode et comme électrode de travail une cathode.

**10.** Procédé suivant l'une des revendications 6 à 9,
dans lequel on choisit, pour le rayon de courbure local de la pointe incurvée de manière convexe de la contre-électrode, une valeur comprise entre 0,01 et 1 cm, notamment plus petite que 0,1 cm.

**11.** Procédé suivant l'une des revendications 6 à 10,
dans lequel on utilise une pile à combustible à membrane électrolyte polymère (PEM-FC), une pile à combustible au méthanol direct (DMFC) ou une pile à combustible à haute température (SOFC ou HT-PEM-FC) comme pile à combustible.

**Figur 1 (Stand der Technik)**

**Figur 2 (Stand der Technik)**

**Figur 3 (Stand der Technik)**

**Figur 4**

**Figur 5**

**Figur 6**

Figur 7

**Figur 8**

**Figur 9**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015001572, A. A. Kulikovsky und P. Berg

**In der Beschreibung aufgeführte Nicht-Patentliteratur**

- **B. ADLER et al.** *J. Electrochem. Soc.,* 2002, vol. 149, E166
- **G. J. OFFER et al.** Using electrochemical impedance spectroscopy to compensate for errors when measuring polarisation curves during threeelectrode measurements of solid oxide fuel cell electrodes. *Electrochimica Acta,* 2008, vol. 53, 7614-7621
- **MASAHIRO WATANABE et al.** Management of the Water content in Polymer electrolyte membranes with porous fiber wicks. *Journal of the Electrochemical Society,* November 1993, vol. 140
- **JAN HENDRIK OHS et al.** The effect of the reference electrode position on the measurement of half cell polarization in proton-exchange membrane fuel cells. *Journal of the Electrochemical Society,* 2012, vol. 159 (7), F181-186